# EUROPEAN PATENT SPECIFICATION

(11) **EP 2 720 512 B1**
(45) Date of publication and mention of the grant of the patent: **17.12.2014**
(21) Application number: 12306249.9
(22) Date of filing: 12.10.2012
(51) Int. Cl.: H04W 88/08, H04W 72/12

(54) **Remote radio device and baseband processing node**
Fernfunkvorrichtung und Basisbandverarbeitungsknoten
Dispositif radio à distance et noeud de traitement de bande de base

(43) Date of publication of application: 16.04.2014
(73) Proprietor: ALCATEL LUCENT, 92100 Boulogne-Billancourt (FR)
(72) Inventor: WICH, Andreas, 70569 Stuttgart (DE)
(74) Representative: Lück, Stephan

(56) References cited:
- EP-A1- 2 348 785
- WO-A1-2010/075864
- US-A1- 2012 008 696
- US-A1- 2012 176 980

## Description

### Field of the invention

The present invention refers to a remote radio device for a radio access network and a method for operating such a device, the device being operable for communicating with a baseband processing node of the access network. The invention further refers to a baseband processing node for a radio access network and a method for operating such a node, the node being operable for communicating with a remote radio device of the access network. Furthermore, the invention refers to respective radio access network.

### Background

A base station for a wireless communication network, such as a cellular radio access network, may be subdivided into a baseband processing node and at least one radio head connected to the baseband processing node. Typically, the base station comprises a cluster of multiple radio heads connected to the baseband processing node. Usually, optical links are used in order to connect the remote radio heads to the baseband processing node. An interface used for the communication between the baseband processing node and the radio head has been specified (Common Public Radio Interface, CPRI). Base stations that are subdivided into a baseband processing node and one or more remote radio heads are also referred to as distributed base stations.

In EP 2 348 785 A1, a wireless communication system comprising a remote access device and a base station device is disclosed.

In US 2012/0176980 A1, a method for operating a centralized base station is disclosed. According to this method, a local scheduler of a remote radio unit receives physical layer information (e.g. CQI, RSSI, SR) from a terminal and performs scheduling using this information.

In WO 2010/075864 A1, a method for distributed mobile communications in a network with a base station is disclosed. The base station comprises a central unit and a plurality of remote units.

### Summary

The object of the present invention is to provide an improved distributed base station architecture that allows using both baseband processing resources as well as transmission resources of a backhaul network efficiently

To solve this object, a remote radio device according to claim 1, a method for operating a remote radio device according to claim 6, a baseband processing node according to claim 7 and a method for operating a baseband processing node according to claim 10 are provided.

According to an embodiment, a remote radio device for a radio access network is provided, said device being operable for communicating with a baseband processing node of the access network, wherein the remote radio device comprises an uplink baseband signal forwarding arrangement operable for forwarding an uplink digital baseband signal to the baseband processing node; and a downlink baseband processor operable for generating a digital downlink baseband signal by processing downlink data received by the remote radio device. Preferably, the downlink data may be received by the remote radio device from the baseband processing node.

Basically, the remote radio device performs baseband processing in downlink direction only by means of the downlink baseband processor, whereas the remote radio device just forwards the baseband signal in uplink direction by means of the baseband signal forwarding arrangement. The baseband signal forwarding arrangement leaves the uplink digital baseband signal at least substantially unmodified and forwards it e.g. via a backhaul network to a further node of a radio access network such as a baseband processing node.

In the downlink direction, the remote radio device receives the downlink data to which downlink baseband processing has not yet been applied. The downlink may include service data units comprising payload data or signalling data of higher layer protocols. The downlink data can be transmitted with a lower bit rate than a downlink digital baseband signal corresponding to the downlink data. As a consequence, the remote radio device causes a reduced bit rate within fixed part of the access network in downlink direction (e.g. within a backhaul network or backhaul links of the access network) compared to a remote radio device that does not have a downlink baseband processor such as a conventional remote radio head supporting a conventional CPRI backhaul link.

By avoiding baseband signal processing in uplink direction and just forwarding the uplink digital baseband signal, the uplink baseband processing may be performed in a baseband processing node comprising a pool of baseband processing resources associated with multiple remote radio devices. Therefore, pooling effects can be exploited in the uplink direction and the uplink processing resources can be used more efficiently, i.e. a mean utilisation of the uplink baseband processing resources can be increased without increasing the probability of a bottleneck when allocating the uplink baseband processing resources.

In particular regarding physical layer signal processing, uplink baseband processing is more complex than downlink baseband processing. For instance, a time complexity of algorithms used for recovering data bits from the received digital baseband signal is not known at the time of scheduling a corresponding uplink transmission. A number of iterations performed by the uplink baseband processing algorithms heavily depends on the momentary quality of the received radio signal. As a consequence, the amount of uplink baseband processing resources required to process the uplink digital baseband signal is difficult to predict and subject to high fluctuations. These fluctuations must be considered when dimensioning the amount of baseband processing resources (e.g. a number of uplink baseband processors) in a certain radio access network. In downlink direction however, baseband processing is more stream-based even for multi-antenna systems and the processing effort required for generating a downlink digital baseband signal can be relatively precisely estimated because there are at most a few iterative algorithms in downlink baseband processing algorithms, where the number of iterations is difficult to predict. As a consequence, fewer fluctuations in baseband processing resource consumption must be considered when dimensioning the amount of baseband processing resources to be installed in a certain access network in downlink direction.

By performing decentralised downlink baseband processing at the remote radio device, which is preferably located close to antennas of the radio access network, and allowing for an uplink baseband processing in a pool of processing resources, pooling effects can be exploited for the complex uplink baseband processing algorithms and consumption of downlink transmission resources of the backhaul network can be reduced.

In an embodiment, said processing the downlink data includes at least one physical layer processing task for physical layer baseband signal processing and/or includes protocol processing related to at least one protocol of a protocol layer above the physical layer. Downlink physical layer processing may include signal processing operations such as modulating, coding, Inverse Discrete Fourier Transform (IDFT) for multicarrier modulation. Protocol processing may include handling communication protocols of the access network above the physical layer, e.g. a Media Access Control (MAC) protocol, a Radio Link Control (RLC) protocol, a Packet Data Convergence Protocol (PDCP), etc.

In an embodiment, the uplink baseband signal is a digital signal comprising a representation of an analogue digital baseband signal in the time domain, preferably multiple subsequent samples of the analogue digital baseband signal.

Preferably, in an embodiment, the baseband forwarding arrangement comprises an encoder operable for generating an encoded, preferably compressed, representation of the samples. Regardless of whether or not the digital baseband signal is encoded (e.g. compressed), the uplink baseband signal may be forwarded e.g. by the uplink baseband forwarding arrangement without modifying the samples contained therein.

Furthermore, the remote radio device may be operable for performing downlink scheduling. Accordingly, in an embodiment, the device comprises a downlink scheduler for scheduling downlink transmissions by assigning downlink radio transmission resources to the downlink transmissions.

In many radio systems, downlink scheduling decisions depend on radio link measurements performed by a radio terminal. In an exemplary embodiment, the device comprises a measurement data receiver operable for receiving from the baseband processing device measurement data that characterize characteristics of a radio link between a radio terminal and an antenna associated with the remote radio device. Preferably, the measurements are related to the downlink direction of the radio link.

According to another embodiment, a method for operating a remote radio device for a radio access network is provided, the method comprising communicating with a baseband processing node of the access network, wherein the method further comprises forwarding an uplink digital baseband signal to a baseband processing device; and generating a digital downlink baseband signal by processing downlink data received by the remote radio device. Preferably, the downlink data may be received by the remote radio device from the baseband processing node.

According to still another embodiment, a remote radio device for a radio access network is provided, wherein the remote radio device is operable for executing the method for operating a remote radio device.

According to a further embodiment, a baseband processing node for a radio access network is provided, the baseband processing node being operable for communicating with a remote radio device of the access network, wherein the baseband processing device comprises a downlink data forwarding arrangement operable for receiving downlink data and transmitting the downlink data to the remote radio device; and an uplink baseband processor operable generating uplink data by processing an uplink digital baseband signal received from the remote radio device.

In an embodiment, said processing the uplink digital baseband signal includes at least one physical layer processing task for physical layer baseband signal processing and/or includes protocol processing of at least one protocol of a protocol layer above the physical layer. Uplink physical layer baseband processing may include signal processing, e.g. demodulation, decoding, Discrete Fourier Transformation (DFT) for multicarrier demodulation, etc. Protocol processing may include handling of communication protocols used in the access network such as the protocols mentioned above in connection with downlink protocol processing.

In an embodiment, the baseband processing node comprises an uplink scheduler for scheduling uplink transmissions by assigning uplink radio transmission resources to the uplink transmission to be scheduled. When using the baseband processing node in combination with the above described remote radio device, a distributed scheduler may be obtained, with the uplink scheduling being performed in the baseband processing node and the downlink scheduling being performed in the remote radio device.

In an embodiment, the baseband processing node comprises a measurement data forwarder operable for receiving measurement data that characterize characteristics of a radio link between a radio terminal and an antenna associated with the remote radio device and for forwarding the measurement data to the remote radio device. According to this embodiment, the remote radio device may use the forwarded measurement data for downlink scheduling. The measurement data may include e.g. a channel status report generated by a terminal. In UMTS, the measurement data may include a Channel Quality Indication (CQI). In LTE, the measurement data may include the CQI, a Rank Indication (RI), a number of spatial layers used for spatial multiplex and/or a Precoder matrix indication (PMI) for indicating a pre-coding matrix preferred by the terminal.

However, the present invention is not limited to a distributed scheduler. In another embodiment, the baseband processing node comprises a central scheduler operable for scheduling downlink and uplink transmissions by assigning radio transmission resources to the downlink and uplink transmissions.

According to another embodiment, a method for operating a baseband processing node for a radio access network is provided, the method comprising communicating with a remote radio device of the access network, wherein the method further comprises receiving downlink data and transmitting the downlink data to the remote radio device; and processing an uplink digital baseband signal received from the remote radio device.

According to yet another embodiment, a baseband processing node for a radio access network is provided, wherein the baseband processing node is operable for executing the method for operating a baseband processing node.

According to still another embodiment, a radio access network is provided, wherein the radio access network comprises a remote radio device according to the invention and a baseband processing node according to the invention. Embodiments of both the remote radio device according to the invention as well as the baseband processing node according to the invention are described herein.

In an embodiment, the remote radio device and the baseband processing node are coupled with each other by means of a backhaul network of the radio access network.

### Brief description of the figures

Exemplary embodiments and further advantages of the present invention are shown in the Figures and described in detail hereinafter.
- Figure 1: shows a radio access network connected to a core network;
- Figure 2: shows a block diagram of a baseband processing node of the radio access network shown in Figure 1;
- Figure 3: shows a block diagram of a remote radio device of the radio access network shown in Figure 1 according to a first preferred embodiment; and
- Figure 4: shows a block diagram a baseband processing node according to a second preferred embodiment.

### Description of the embodiments

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

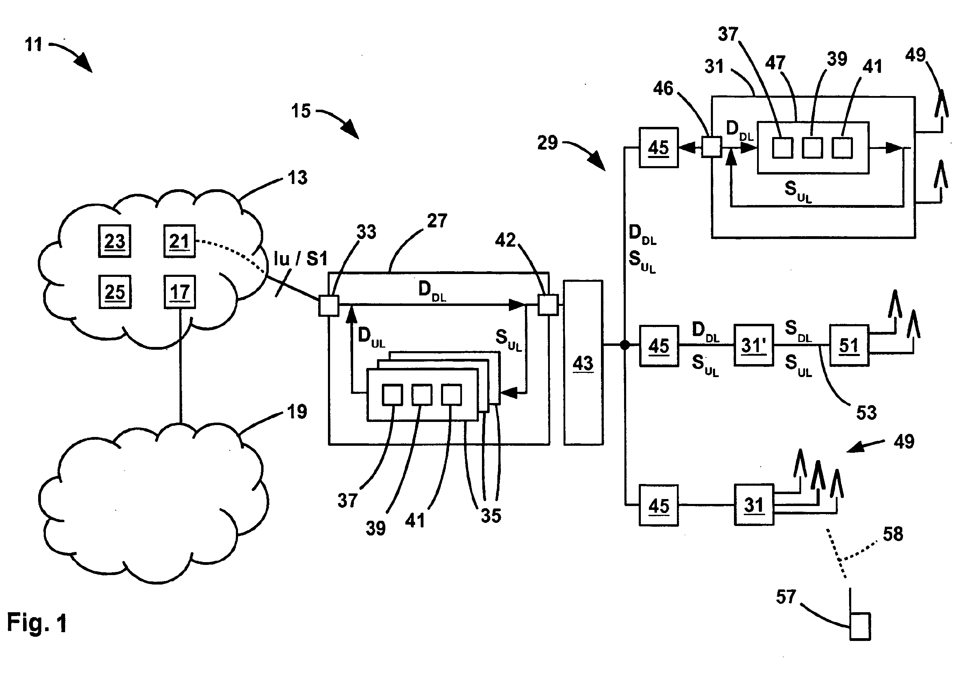

Figure 1 shows a communication network 11, comprising a core network 13 and a wireless access network 15. In the shown embodiment, the network 11 is part of a mobile communication system as defined by the third generation partnership project (3GPP). However, the present invention may also be applied in connection with other types of wireless communication systems. For example, the core network 13 may be an Evolved Packet Core (EPC) of the 3GPP communication system. The core network 13 therefore may comprise a Packet Data Network Gateway (PDN GW 17) to connect the core network 13 with a wide area network external to the mobile communication network 11 such as the Internet 19. Furthermore, the core network 13 may comprise a Serving Gateway 21 for interconnecting the core network 13 with the access network 15. In addition, the core network 11 may have a Mobility Management Entity (MME 23) for mobility management and paging as well as a Home Subscriber Server (HSS 25) e.g. for maintaining information about the individual subscribers of the network 11. The present invention is not limited to the Evolved Packet Core 13 shown in this exemplary embodiment. The invention can be applied in connection with any type of mobile communication network 11 or core network 13. In particular, a core network architecture of earlier releases of the 3GPP standards may be applied instead of the Evolved Packet Core 13.

The wireless access network 15 has at least one baseband processing node 27, a backhaul network 29 and at least one remote radio device 31 connected to the baseband processing node 27 via the backhaul network 29.

A core network port 33 of the baseband processing node 27 is connected to the core network 13. In the shown embodiment, the wireless access network 15 is a long-term evolution (LTE) network. Consequently, an interface between the core network 13 and the baseband processing node 27 is the S1 interface specified by the 3GPP. In another embodiment, the access network 15 is of a different type, e.g. a UMTS access network (UTRAN) and the interface between the core network 13 and the baseband processing node 27 may be in the Iu interface in case that the baseband processing node 27 includes the functions of a radio network controller (RNC). Otherwise, a dedicated RNC (not shown) may be provided that may be located between the core network 13 and the baseband processing node 27. In this case, the interface between the core network 13 and the RNC may be the Iu interface and the interface between the RNC and the baseband processing node 27 may be the Iub interface. In yet another embodiment, the access network 15 and/or the core network 13 may support multiple systems (e.g. LTE and UMTS) and multiple interfaces such as S1 and Iu are used on the link between the core network 13 and the baseband processing node 27.

The baseband processing node 27 comprises at least one uplink baseband processor 35 arranged for generating uplink data D_{UL} by processing an uplink digital baseband signal S_{UL} received via the backhaul network 29 from remote radio device 31. In the shown embodiment, the baseband processing node 27 has a pool of multiple uplink baseband processors 35. Each uplink baseband processor 35 of that pool comprises baseband processing resources such as a programmable computer 37 with a general purpose processor, a programmable signal processor 39 and/or digital logic circuitry 41 like at least one programmable logic device such as a Field Programmable Gate Array (FPGA) or an Application-Specific Integrated Circuit (ASIC). As shown in Figure 1, the uplink baseband processor 39 is included in an uplink path so that it may perform at least one uplink baseband processing task. A downlink path bypasses the uplink baseband processors 35 so that downlink data D_{DL} received by the baseband processing node 27 from the core network 13 is forwarded at least substantially unmodified to at least one remote radio device 31.

In the shown embodiment, the backhaul network 29 is a Passive Optical Network (PON), with the baseband processing node 27 being connected to an Optical Line Termination (OLT 43) and the remote radio device 31 connected to an Optical Network Unit (ONU 45) of the backhaul network 29. In another embodiment, a different type of backhaul network 29 is used. For example, the backhaul network 29 may include optical or electrical point-to-point links between the baseband processing node 27 and the individual remote radio devices 31. In yet another embodiment, the backhaul network 29 is a frame switched or packet switched network such as Ethernet, preferably 10 GB Ethernet.

A first port 46 of the remote radio device 31 is connected with the ONU 45. The remote radio device 31 comprises a downlink baseband processor 47 arranged for generating a digital downlink baseband signal S_{DL} by processing the downlink data D_{DL} received from the baseband processing node 27. That is, in downlink direction, the remote radio device 31 receives the downlink data D_{DL} via the first port 46 and generates the downlink digital baseband signal S_{DL} depending on the received downlink data D_{DL}. The downlink baseband processor 47 may have the same basic configuration as the uplink baseband processor 35. In particular, the downlink baseband processor 47 may comprise a computer 37 with a general purpose processor, a programmable signal processor 39 and/or digital logic circuitry 41. In uplink direction, the downlink baseband processor 47 is bypassed and a digital uplink baseband signal S_{UL} regenerated from an RF signal received by antennas 49 is forwarded to the baseband processing node 27 without performing baseband processing, in particular without performing physical layer signal processing, preferably without modifying samples contained in the digital uplink baseband signal S_{UL}.

The remote radio device 31 shown on the top of Figure 1 includes RF circuitry (e.g. digital to analogue converter, analogue to digital converter and/or radio frequency electronics) for processing radio frequency signals. The remote radio device 31 shown on the top of Figure 1 can thus be considered as an enhanced remote radio head with an integrated downlink baseband processor 47.

Another embodiment of the remote radio device 31' includes the downlink baseband processor but not the radio frequency circuitry. The remote radio device 31' according to this embodiment is connected to a separate remote radio head 51 via a digital baseband signal link 53. The Common Public Radio Interface (CPRI) of different digital baseband interfaces may be applied on the baseband signal link 53.

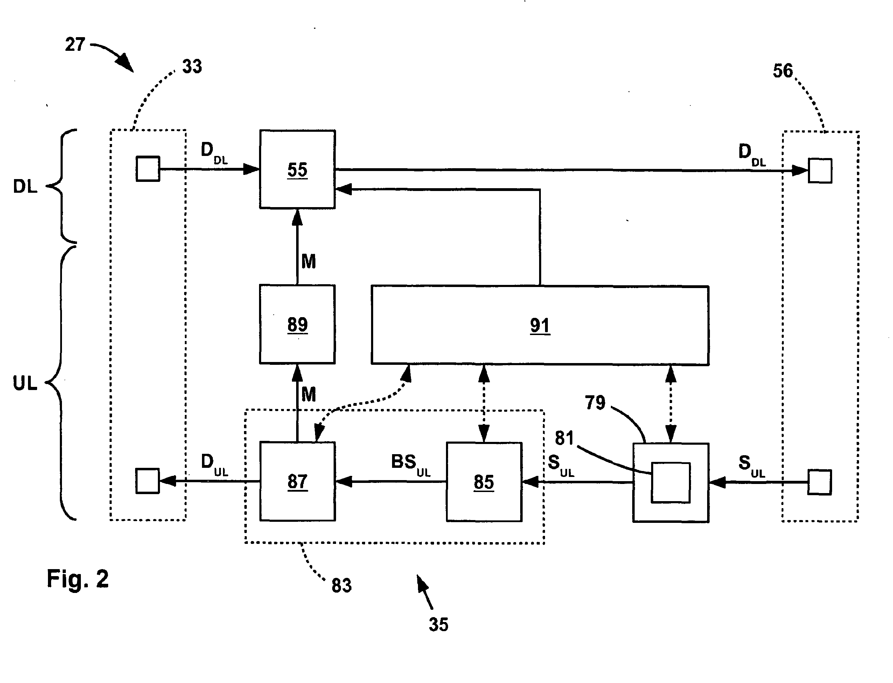

Figure 2 shows the baseband processing node 27 in more detail. In the downlink (DL) path, the baseband processing node 27 comprises a downlink forwarding arrangement comprising circuitry 55 configured for receiving the downlink data D_{DL} from the core network 13 e.g. via the core network port 33 (e.g. interface Iu and/or S1) and for forwarding the downlink data D_{DL} via a second port 56 of the baseband processing node 27 to the remote radio device 31. The forwarding arrangement 55 may forward the data D_{DL} without modifying it, in particular without calculating the downlink digital baseband signal S_{DL} comprising samples, such as I/Q samples, from the downlink data D_{DL}. In another embodiment (not shown), the downlink forwarding arrangement 55 is omitted and the core network forwards the downlink data D_{DL} directly over the backhaul network 29 to the remote radio device 31. In other words, the downlink path bypasses the baseband processing node 27 in this embodiment.

In a preferred embodiment, the downlink data D_{DL} may comprise payload data forwarded by the core network 13 to the access network 15 to be transmitted to a mobile terminal 57 (also referred to as user equipment UE) over the radio link 58. Preferably, the downlink data D_{DL} include service data units SDU of the highest protocol layer of the access network 15. In the shown embodiment, the downlink data D_{DL} comprises Packet Data Convergence Protocol (PDCP) SDUs. In other embodiments that are not related to 3GPP systems, the downlink data D_{DL} may correspond to SDUs of a different protocol used in the access network 11 according to that embodiment. For example, the downlink data may comprise Internet Protocol (IP) packets or encapsulated IP packets to be forwarded to the terminal 57.

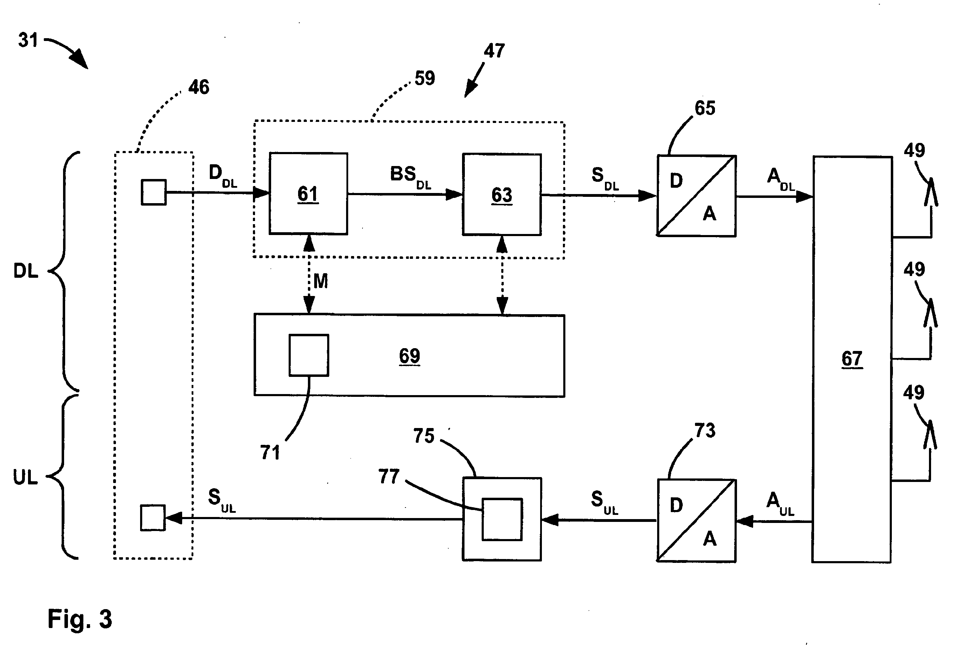

Figure 3 shows the remote radio device 31 in more detail. The downlink baseband processor 47 is arranged for performing at least one downlink baseband processing task for down link processing of the downlink data D_{DL} received vi a the first port 46. Downlink baseband processing 59 may comprise downlink protocol processing 63 related to protocols of the access network 15 above the physical layer and/or physical layer signal processing 63. In the shown exemplary embodiment related to the 3GPP systems UMTS and LTE, protocol processing 61 may include PDCP protocol processing, radio link control (RLC) protocol processing and/or medium access control (MAC) protocol processing. In the shown embodiment, the result of downlink protocol processing 63 comprises a downlink bit stream BS_{DL} that may be included into transport blocks. The downlink bit stream BS_{DL} or the transport blocks containing the downlink bit stream BS_{DL} are forwarded to the physical layer signal processing block 63.

Physical layer signal processing 63 may include coding, e.g. applying forward error correction (FEC), modulating (e.g. QAM and/or IFFT for multicarrier modulation such as OFDM) and/or antenna and resource mapping. Downlink baseband processing 59 generates the downlink digital baseband signal S_{DL} depending on the downlink data D_{DL}. The downlink digital baseband signal S_{DL} may be fed into a digital to analogue converter 65 that generates an analogue baseband signal A_{DL} that may be converted into a radio frequency signal by radio frequency circuitry 67 and transmitted by means of the antennas 49 so that at least one terminal 57 can receive it.

In the embodiment shown in Figure 3, the remote radio device 31 comprises a downlink scheduler 69 that controls both the protocol processing stage 61 as well as the physical layer signal processing stage 63 of the downlink baseband processor 47 in order to allocate radio transmission resources (e.g. frequency, time intervals, codes, spatial layers) to scheduled radio transmissions of the downlink data D_{DL} over the radio link 58. In an embodiment, the downlink scheduler 69 uses measurement data M generated by the mobile terminal 57 for scheduling the transmissions. For example, the downlink scheduler 69 may analyse channel status reports generated by the terminal 57. To this end, the baseband processing node 27 may forward the channel status report or the measurement data M included therein to the remote radio device 31. A measurement data receiver 71 of the remote radio device 31 may receive the forwarded reports or measurement data M so that the downlink scheduler 69 may use them for efficient downlink scheduling.

As regards the uplink (UL), the radio frequency circuitry 67 receives an uplink radio signal transmitted by a terminal 57 over the radio link 58 via the antennas 49, converts it into an uplink analogue baseband signal A_{UL} that is in turn converted into an uplink digital baseband signal S_{UL} by an analogue to digital converter 73 of the remote radio device 31. A baseband signal forwarding arrangement 75 of the remote radio device 31 comprises circuitry operable for forwarding the digital uplink baseband signal S_{UL} via the first port 46 over the backhaul network 29 to the baseband processing node 27. The baseband signal forwarding arrangement 75 may comprise a packetizing arrangement that generates frames or packets to be transmitted over the backhaul network 29. In an embodiment, the baseband signal forwarding arrangement 75 may comprise and encoder 77 arranged for compressing the uplink digital baseband signal S_{UL} before transmitting it over the backhaul network 29. In both embodiments (with encoder 77 or without encoder 77) the uplink digital baseband signal S_{UL} transmitted via the first port 46 over a backhaul network 29 comprises samples of the received analogue baseband signal A_{UL} in the time domain either in an uncompressed or in a compressed representation. Both the downlink baseband signal and the uplink baseband signal being complex signals, the respective digital baseband signals S_{DL} and S_{UL} may include a first component I and a second component Q and are therefore also referred to as I/Q samples. In an embodiment, the baseband signal forwarding arrangement 75 leaves the samples of the uplink digital baseband signal S_{UL} unmodified.

As shown in Figure 2, the baseband processing node 27 comprises an uplink baseband signal receiver 79 adapted to receive the uplink digital baseband signal S_{UL} from the remote radio device 31 via the second port 56. If the remote radio device transmits a compressed digital baseband signal S_{UL} (e.g. if the remote radio device 31 has the encoder 77), the baseband processing node 27 comprises a decoder 81 for converting the compressed representation of the uplink baseband signal S_{UL} back into an uncompressed sequence of I/Q samples without modifying the samples.

The uplink baseband processor 35 is arranged, preferably programmed for performing uplink baseband processing tasks 83. Uplink baseband processing 83 may comprise physical layer uplink signal processing 85 and/or uplink protocol processing 87. Uplink physical signal processing 85 may comprise signal processing operations corresponding to the above-mentioned downlink signal processing operations. That is, uplink physical signal processing may include demodulation (QAM demodulation and/or FFT for SC-FDMA demodulation, decoding such as forward error checking sequence verifying, depuncturing, etc.). The result of uplink physical signal processing 85 may be an uplink bit stream BS_{UL} that may be contained in a transport block that can be processed by the uplink protocol processing block 87.

Uplink protocol processing 87 may comprise protocol handling of the protocols of the access network 15. The shown embodiment related to 3GPP systems, in particular UMTS and LTE, uplink protocol processing 87 may include protocol processing related to the protocols PDCP, RLC and/or MAC. In the shown embodiment, the result of an uplink protocol processing 87 may comprise the uplink data D_{UL}, e.g. an SDU of the highest protocol layer of the access network 15, in particular PDCP SDUs. The baseband processing node 27 outputs the uplink data D_{UL} via the core network port 33.

The uplink baseband processing 83 may include retrieving channel status reports on channel measurement data M included therein from the digital uplink baseband signal S_{UL} for example, the uplink protocol processing block 87 may retrieve the channel status reports and forward them to a measurement data forwarder 89 that is operable to forwarding the channel status reports or the measurements M to the remote radio device 31 so that they can be received by the measurement data receiver 71. To this end, the measurement data forwarder 89 may communicate the channel status reports of the measurement data contained therein to the downlink forwarding arrangement 55 which may transmit them over the backhaul network 29 to the remote radio device 31.

The channel status report may comprise any type of measurement data generated by the terminal 57, in particular a Channel Quality Indication (CQI) used in UMTS networks. In LTE, the channel status report may comprise the CQI, a Rank Indication (RI) indicating a number of spatial layers using the spatial multiplex or a pre-coder matrix indication (PMI) indicating a pre-coder matrix that the downlink scheduler 69 should use for downlink transmissions over the radio link 58.

Furthermore, the baseband processing node 27 comprises an uplink scheduler 91 operable for scheduling radio transmissions over the radio link 58 in uplink direction by assigning uplink transmission resources (e.g. time intervals, codes or spatial layers) to the individual transmissions. The uplink scheduler 91 may control the uplink baseband processing blocks 83 according to an uplink schedule calculated by the uplink scheduler 91. In addition, the uplink scheduler 91 may forward scheduling grants G e.g. via the downlink forwarding arrangement 55 and the backhaul network 29 to the remote radio device 31. These scheduling grants G are destined to a terminal 57. Thus, the downlink baseband processing block 59 of the remote radio device 31 may encode the scheduling grants G and transmit them over the radio link 58 to the terminals 57.

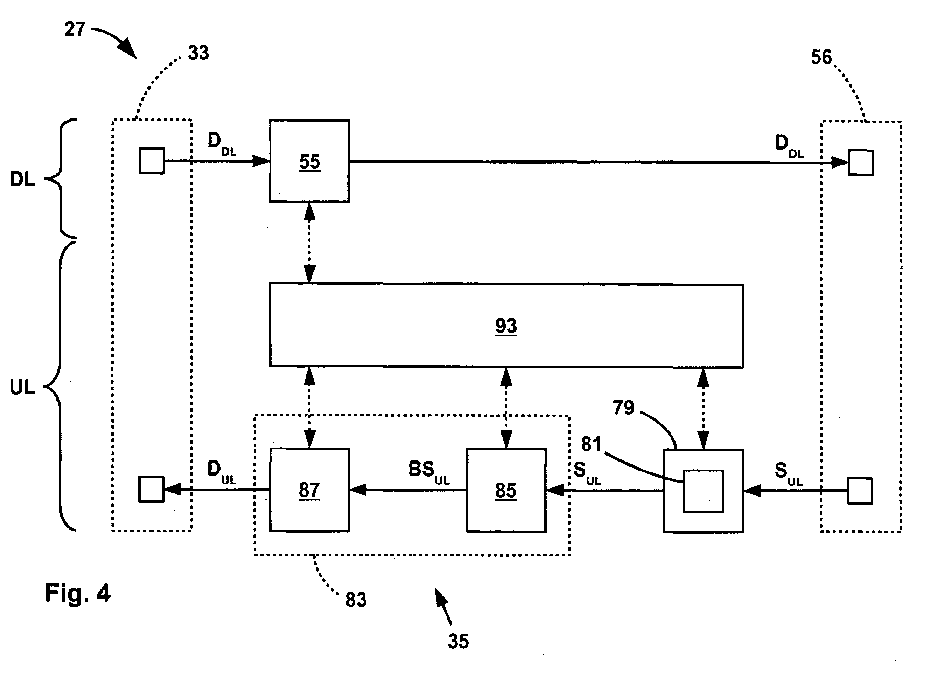

The embodiments of the baseband processing node 27 and the remote radio device 31 shown in Figures 2 and 3 respectively have a distributed scheduler including the downlink scheduler 69 of the remote radio device 31 and the uplink scheduler 91 of the baseband processing node 27. In the embodiment shown in Figure 4, the baseband processing node 27 has a central scheduler 93 that is operable for performing both downlink scheduling as well as uplink scheduling. The central scheduler 93 communicates over the backhaul network 29 with the downlink baseband processor 47 in order to control the downlink baseband processing operations of downlink baseband processing block 59 according to a downlink schedule calculated by the central scheduler 93. Accordingly, an embodiment of the remote radio device 31 may be provided, where the downlink scheduler 69 is omitted.

To sum up, the access network 15 described herein allows to centralise uplink baseband processing tasks so that they can be performed in a pool of multiple uplink baseband processors 35 located in the baseband processing node 27 and associated to multiple remote radio devices 31. Pooling the uplink baseband processing allows for exploiting pooling gains, which is particularly advantageous in the uplink because uplink baseband processing comprises the execution of iterative algorithms with a highly varying number of iterations. In downlink direction, baseband signal processing is performed in a decentralised way so that transmission resources in the backhaul network 29 can be economised. As a consequence, the access network 15 combines both efficient use of processing resources by pooling and a reduction of resource consumption in the backhaul network 29 and therefore achieves an improved overall efficiency.

The functions of the various elements shown in the figures, including any functional blocks such as the baseband processors 35, 47 and the forwarding arrangements 75, 79 may be provided through the use of dedicated hardware as well as hardware capable of executing appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Remote radio device (31) for a radio access network (15), operable for communicating with a baseband processing node (27) of the access network (15), wherein the remote radio device (31) comprises
- an uplink baseband signal forwarding arrangement (75) operable for forwarding an uplink digital baseband signal (S_{UL}), regenerated from an RF signal received by an antenna (49) from the radio terminal (57), to the baseband processing node (27)without performing baseband processing, and
- a downlink baseband processor (47) operable for generating a digital downlink baseband signal (S_{DL}) by processing (59) downlink data (D_{DL}) received from the baseband processing node (27);
**characterized in that** the device (31) comprises
- a measurement data receiver (71) operable for receiving from the baseband processing node (27) measurement data (M) that characterize characteristics of a radio link (58) between a radio terminal (57) and an antenna (49) associated with the remote radio device (31).

2. Device (31) according claim 1, wherein said processing (59) the downlink data (D_{DL}) includes physical layer baseband signal processing (63) and/or includes protocol processing (61) related to at least one protocol of a protocol layer above the physical layer.

3. Device (31) according to one of the precedent claims, wherein the uplink baseband signal (S_{UL}) is a digital signal comprising a representation of an uplink analogue baseband signal (A_{UL}) in the time domain.

4. Device (31) according to claim 3, wherein the uplink baseband forwarding arrangement (75) comprises an encoder (77) operable for generating an encoded representation of the samples.

5. Device (31) according to one of the precedent claims, wherein the device (31) comprises a downlink scheduler (69) for scheduling downlink transmissions by assigning downlink radio transmission resources to the downlink transmissions.

6. Method for operating a remote radio device (31) for a radio access network (15), the method comprising communicating with a baseband processing node (27) of the access network (15), wherein the method further comprises
- forwarding (75) an uplink digital baseband signal (S_{UL}) regenerated from an RF signal received by an antenna (49) from the radio terminal (57), to a baseband processing node (27) without performing baseband processing; and
- generating a digital downlink baseband signal (S_{DL}) by processing (59) downlink data (D_{DL}) received from the baseband processing node (27);
**characterized in that** the method comprises
- receiving from the baseband processing node (27) measurement data (M) that characterize characteristics of a radio link (58) between a radio terminal (57) and an antenna (49) associated with the remote radio device (31).

7. Baseband processing node (27) for a radio access network (15), operable for communicating with a remote radio device (31) of the access network (15), wherein the baseband processing node (27) comprises
- a downlink data forwarding arrangement (55) operable for receiving downlink data (D_{DL}) from a core network (13) and forwarding the downlink data (D_{DL})unmodified to the remote radio device (31); and
- an uplink baseband processor (35) operable for generating uplink data (D_{UL}) by processing (83) an uplink digital baseband signal (S_{UL}) received from the remote radio device (31)
**characterized in that** the baseband processing node (27) comprises
- a measurement data forwarder (89) operable for retrieving from the received uplink digital baseband signal (S_{UL}) measurement data (M) that characterize characteristics of a radio link (58) between a radio terminal (57) and an antenna (49) associated with the remote radio device (31) and for forwarding the measurement data (M) to the remote radio device (31).

8. Node (27) according to claim 7, wherein said processing (83) the uplink digital baseband signal (S_{UL}) includes physical layer baseband signal processing (85) and/or said processing the uplink digital baseband signal (S_{UL}) includes protocol processing (87) of at least one protocol of a protocol layer above the physical layer.

9. Node (27) according to claim 7 or 8, wherein the node (27) comprises an uplink scheduler (91) for scheduling uplink transmissions by assigning uplink radio transmission resources to the uplink transmission.

10. Method for operating a baseband processing node (27) for a radio access network (15), the method comprising communicating with a remote radio device (31) of the access network (15), wherein the method further comprises
- receiving downlink data (D_{DL}) from a core network (13) and forwarding (55) the downlink data (D_{DL}) unmodified to the remote radio device (31); and
- processing (83) an uplink digital baseband signal (S_{UL}) received from the remote radio device (31);
**characterized in that** the method comprises
- retrieving from the received uplink digital baseband signal (S_{UL}) measurement data (M) that characterize characteristics of a radio link (58) between a radio terminal (57) and an antenna (49) associated with the remote radio device (31) and
- forwarding the measurement data (M) to the remote radio device (31).

11. Radio access network (15) comprising a remote radio device (31) according to claim 1 and a baseband processing node (27) according to claim 7.

12. Radio access network (15) according to claim 11, wherein the remote radio device (31) and the baseband processing node (8) are coupled with each other by means of a backhaul network (29) of the radio access network (15).

## Patentansprüche

1. Fernfunkvorrichtung (31) für ein Funkzugangsnetzwerk (15), betreibbar für die Kommunikation mit einem Basisbandverarbeitungsknoten (27) des Zugangsnetzwerks (15), wobei die Fernfunkvorrichtung (31) umfasst:
- Eine Uplink-Basisbandsignal-Weiterleitungsanordnung (75), betreibbar für die Weiterleitung eines aus einem von dem Funkendgerät (57) an einer Antenne (49) empfangenen RF-Signal regenerierten digitalen Uplink-Basisbandsignals (S_{UL}) an den Basisbandverarbeitungsknoten (27) ohne Durchführung einer Basisbandverarbeitung; und
- einen Downlink-Basisbandprozessor (47), betreibbar für die Erzeugung eines digitalen Downlink-Basisbandsignals (S_{DL}) durch Verarbeiten (59) von von dem Basisbandverarbeitungsknoten (27) empfangenen Downlink-Daten (D_{DL});
**dadurch gekennzeichnet, dass** die Vorrichtung (31) umfasst:
- einen Messdatenempfänger (71), betreibbar für den Empfang von Messdaten (M), welche Eigenschaften einer Funkverbindung (58) zwischen einem Funkendgerät (57) und einer mit der Fernfunkvorrichtung (31) assoziierten Antenne (49) kennzeichnen, von dem Basisbandverarbeitungsknoten (27).

2. Vorrichtung (31) nach Anspruch 1, wobei die besagte Verarbeitung (59) der Downlink-Daten (D_{DL}) die Verarbeitung (63) eines Basisbandsignals der physischen Schicht umfasst, und/oder die auf mindestens ein Protokoll der Protokollschicht oberhalb der physischen Schicht bezogene Protokollverarbeitung (61) umfasst.

3. Vorrichtung (31) nach einem der vorstehenden Ansprüche, wobei das Uplink-Basisbandsignal (S_{UL}) eine digitales Signal ist, welches eine Darstellung eines analogen digitalen Uplink-Basisbandsignals (A_{UL}) in dem Zeitbereich umfasst.

4. Vorrichtung (31) nach Anspruch 3, wobei die Uplink-Basisbandsignal-Weiterleitungsanordnung (75) einen Codierer (77) zum Erzeugen einer codierten Darstellung der Abtastwerte umfasst

5. Vorrichtung (31) nach einem der vorstehenden Ansprüche, wobei die Vorrichtung (31) einen Downlink-Scheduler (69) zum Planen von Downlink-Übertragungen durch Zuweisen von Downlink-Funkübertragungsressourcen an die Downlink-Übertragungen umfasst.

6. Verfahren zum Betreiben einer Fernfunkvorrichtung (31) für ein Zugangsnetzwerk (15), wobei das Verfahren das Kommunizieren mit einem Basisbandverarbeitungsknoten (27) des Zugangsnetzwerks (15) umfasst, wobei das Verfahren weiterhin umfasst:
- Weiterleiten (75) eines aus einem von dem Funkendgerät (57) an einer Antenne (49) empfangenen RF-Signal regenerierten digitalen Uplink-Basisbandsignals (S_{UL}) an einen Basisbandverarbeitungsknoten (27) ohne Durchführen einer Basisbandverarbeitung; und
- Erzeugen eines digitalen Downlink-Basisbandsignals (S_{DL}) durch Verarbeiten (59) von von dem Basisbandverarbeitungsknoten (27) empfangenen Downlink-Daten (D_{DL});
**dadurch gekennzeichnet, dass** das Verfahren umfasst:
- Empfangen von Messdaten (M), welche Eigenschaften einer Funkverbindung (58) zwischen einem Funkendgerät (57) und einer mit der Fernfunkvorrichtung (31) assoziierten Antenne (49) kennzeichnen, von dem Basisbandverarbeitungsknoten (27).

7. Basisbandverarbeitungsknoten (27) für ein Funkzugangsnetzwerk (15), betreibbar für die Kommunikation mit einer Fernfunkvorrichtung (31) des Zugangsnetzwerks (15), wobei der Basisbandverarbeitungsknoten (27) umfasst:
- Eine Uplink-Datenweiterleitungsanordnung (55), betreibbar für den Empfang von Downlink-Daten (D_{DL}) von einem Kernnetzwerk (13), und für das Weiterleiten der unveränderten Downlink-Daten (D_{DL}) an die Fernfunkvorrichtung (31); und
- Einen Uplink-Basisbandprozessor (35), betreibbar für die Erzeugung von Uplink-Daten (D_{UL}) durch Verarbeiten (83) eines von der Fernfunkvorrichtung (31) empfangenen digitalen Uplink-Basisbandsignals (S_{UL});
**dadurch gekennzeichnet, dass** der Basisbandverarbeitungsknoten (27) umfasst:
- eine Messdatenweiterleitungsvorrichtung (89), betreibbar für das Abrufen von Messdaten (M), welche Eigenschaften einer Funkverbindung (58) zwischen einem Funkendgerät (57) und einer mit der Fernfunkvorrichtung (31) assoziierten Antenne (49) kennzeichnen, aus dem empfangenen digitalen Uplink-Basisbandsignal (S_{UL}), und für das Weiterleiten der Messdaten (M) an die Fernfunkvorrichtung (31).

8. Knoten (27) nach Anspruch 7, wobei die besagte Verarbeitung (83) des digitalen Uplink-Basisbandsignals (S_{UL}) die Verarbeitung (85) eines Basisbandsignals der physischen Schicht umfasst, und/oder die besagte Verarbeitung des digitalen Uplink-Basisbandsignals (S_{UL}) die Protokollverarbeitung (87) mindestens eines Protokolls einer Protokollschicht oberhalb der physischen Schicht umfasst.

9. Knoten (27) nach Anspruch 7 oder 8, wobei der Knoten (27) einen Uplink-Scheduler (91) zum Planen von Uplink-Übertragungen durch Zuweisen von Uplink-Funkübertragungsressourcen an die Uplink-Übertragung umfasst.

10. Verfahren zum Betreiben eines Basisbandverarbeitungsknotens (27) für ein Zugangsnetzwerk (15), wobei das Verfahren das Kommunizieren mit einer Fernfunkvorrichtung (31) des Zugangsnetzwerks (15) umfasst, wobei das Verfahren weiterhin umfasst:
- Empfangen von Downlink-Daten (D_{DL}) von einem Kernnetzwerk (13), und Weiterleiten (55) der unveränderten Downlink-Daten (D_{DL}) an die Fernfunkvorrichtung (31); und
- Verarbeiten (83) eines von der Fernfunkvorrichtung (31) empfangenen digitalen Uplink-Basisbandsignals (S_{UL});
**dadurch gekennzeichnet, dass** das Verfahren umfasst:
- Abrufen von Messdaten (M), welche Eigenschaften einer Funkverbindung (58) zwischen einem Funkendgerät (57) und einer mit der Fernfunkvorrichtung (31) assoziierten Antenne (49) kennzeichnen, aus dem empfangenen digitalen Uplink-Basisbandsignal (S_{UL}), und
- Weiterleiten der Messdaten (M) an die Fernfunkvorrichtung (31).

11. Funkzugangsnetzwerk (15), umfassend eine Fernfunkvorrichtung (31) gemäß Anspruch 1 sowie einen Basisbandverarbeitungsknoten (27) gemäß Anspruch 7.

12. Funkzugangsnetzwerk (15) gemäß Anspruch 11, wobei die Fernfunkvorrichtung (31) und der Basisbandverarbeitungsknoten (8) anhand eines Backhaul-Netzwerks (29) des Funkzugangsnetzwerks (15) miteinander gekoppelt sind.

## Revendications

1. Dispositif radio à distance (31) pour un réseau d'accès radio (15), permettant de communiquer avec un noeud de traitement en bande de base (27) du réseau d'accès (15), le dispositif radio à distance (31) comprenant
- un dispositif de transfert de signal en bande de base de liaison montante (75) permettant le transfert d'un signal numérique en bande de base de liaison montante (S_{UL}), régénéré à partir d'un signal RF reçu par une antenne (49) à partir du terminal radio (57), vers le noeud de traitement en bande de base (27) sans exécuter de traitement en bande de base ; et
- processeur en bande de base de liaison descendante (47) permettant de générer un signal numérique en bande de base de liaison descendante (S_{DL}) en traitant (59) des données de liaison descendante (D_{DL}) provenant du noeud de traitement en bande de base (27) ;
**caractérisé en ce que** le dispositif (31) comprend
- un récepteur de données de mesure (71) permettant de recevoir à partir du noeud de traitement en bande de base (27) des données de mesure (M) qui caractérisent des caractéristiques d'une liaison radio (58) entre un terminal radio (57) et une antenne (49) associée au dispositif radio à distance (31).

2. Dispositif (31) selon la revendication 1, dans lequel ledit traitement (59) des données de liaison descendante (D_{DL}) comprend un traitement de signal en bande de base de couche physique (63) et/ou comprend un traitement de protocole (61) relatif à au moins un protocole d'une couche de protocole située au-dessus de la couche physique.

3. Dispositif (31) selon l'une des revendications précédentes, dans lequel le signal en bande de base de liaison montante (S_{UL}) est un signal numérique comprenant une représentation d'un signal analogique/numérique en bande de base de liaison montante (A_{UL}) au dans le domaine temporel.

4. Dispositif (31) selon la revendication 3, dans lequel le dispositif de transfert de signal en bande de base de liaison montante (75) comprend un codeur (77) permettant de générer une représentation codée des échantillons.

5. Dispositif (31) selon l'une des revendications précédentes, dans lequel le dispositif (31) comprend un planificateur de liaison descendante (69) pour planifier des transmissions de liaison descendante en attribuant des ressources de transmission radio de liaison descendante aux transmissions de liaison descendante.

6. Procédé de fonctionnement d'un dispositif radio à distance (31) pour un réseau d'accès radio (15), le procédé comprenant la communication avec un noeud de traitement en bande de base (27) du réseau d'accès (15), le procédé comprenant en outre les étapes suivantes
- transférer (75) un signal numérique en bande de base de liaison montante (S_{UL}), régénéré à partir d'un signal RF reçu par une antenne (49) à partir du terminal radio (57), vers un noeud de traitement en bande de base (27) sans exécuter de traitement en bande de base ; et
- générer un signal numérique en bande de base de liaison descendante (S_{DL}) en traitant (59) des données de liaison descendante (D_{DL}) provenant du noeud de traitement en bande de base (27) ;
**caractérisé en ce que** le procédé comprend l'étape suivante
- recevoir à partir du noeud de traitement en bande de base (27) des données de mesure (M) qui caractérisent des caractéristiques d'une liaison radio (58) entre un terminal radio (57) et une antenne (49) associée au dispositif radio à distance (31).

7. Noeud de traitement en bande de base (27) pour un réseau d'accès radio (15), permettant de communiquer avec un dispositif radio à distance (31) du réseau d'accès (15), le noeud de traitement en bande de base (27) comprenant
- un dispositif de transfert de données de liaison descendante (55) permettant de recevoir des données de liaison descendante (D_{DL}) à partir d'un réseau central (13) et de transférer les données de liaison descendante (D_{DL}) non-modifiées vers le dispositif radio à distance (31) ; et
- un processeur en bande de base de liaison montante (35) permettant de générer des données de liaison montante (D_{UL}) en traitant (83) un signal numérique en bande de base de liaison montante (S_{UL}) provenant du dispositif radio à distance (31) ;
**caractérisé en ce que** le noeud de traitement en bande de base (27) comprend
- un dispositif de transfert de données de mesure (89) permettant de récupérer à partir du signal numérique en bande de base de liaison montante reçu (S_{UL}) des données de mesure (M) qui caractérisent des caractéristiques d'une liaison radio (58) entre un terminal radio (57) et une antenne (49) associée au dispositif radio à distance (31) et de transférer les données de mesure (M) vers le dispositif radio à distance (31).

8. Noeud (27) selon la revendication 7, dans lequel ledit traitement (83) du signal numérique en bande de base de liaison montante (S_{UL}) comprend le traitement de signal en bande de base de couche physique (85) et/ou ledit traitement du signal numérique en bande de base de liaison montante (S_{UL}) comprend le traitement de protocole (87) d'au moins un protocole d'une couche de protocole située au-dessus de la couche physique.

9. Noeud (27) selon la revendication 7 ou 8, dans lequel le noeud (27) comprend un planificateur de liaison montante (91) pour planifier des transmissions de liaison montante en attribuant des ressources de transmission radio de liaison montante à la transmission de liaison montante.

10. Procédé de fonctionnement d'un noeud de traitement en bande de base (27) pour un réseau d'accès radio (15), le procédé comprenant la communication avec un dispositif radio à distance (31) du réseau d'accès (15), le procédé comprenant en outre les étapes suivantes
- recevoir des données de liaison descendante (D_{DL}) à partir d'un réseau central (13) et transférer (55) les données de liaison descendante (D_{DL}) non-modifiées vers le dispositif radio à distance (31) ; et
- traiter (83) un signal numérique en bande de base de liaison montante (S_{UL}) provenant du dispositif radio à distance (31) ;
**caractérisé en ce que** le procédé comprend les étapes suivantes
- récupérer à partir du signal numérique en bande de base de liaison montante reçu (S_{UL}) des données de mesure (M) qui caractérisent des caractéristiques d'une liaison radio (58) entre un terminal radio (57) et une antenne (49) associée au dispositif radio à distance (31) et
- transférer les données de mesure (M) vers le dispositif radio à distance (31).

11. Réseau d'accès radio (15) comprenant un dispositif radio à distance (31) selon la revendication 1 et un noeud de traitement en bande de base (27) selon la revendication 7.

12. Réseau d'accès radio (15) selon la revendication 11, dans lequel le dispositif radio à distance (31) et le noeud de traitement en bande de base (8) sont couplés l'un à l'autre au moyen d'un réseau d'amenée (29) du réseau d'accès radio (15).
